# FASCICULE DE BREVET EUROPEEN

(11) **EP 0 409 711 B1**
(45) Date de publication et mention de la délivrance du brevet: **29.12.1993**
(21) Numéro de dépôt: 90402041.9
(22) Date de dépôt: 16.07.1990
(51) Int. Cl.: B64G 1/10

(54) **Procédé de lancement dans l'espace d'une capsule et moyen de lancement correspondant**
Verfahren zum Starten einer Kapsel im Raum und Mittel zum Starten
Process to launch a capsule in space and launching means

(30) Priorité: 17.07.1989 FR 8909581
(43) Date de publication de la demande: 23.01.1991
(73) Titulaire: CENTRE NATIONAL D'ETUDES SPATIALES, 75001 Paris (FR)
(72) Inventeur: Johnson, Claude, F-91590 La Ferté Allais (FR); Marx, Pierre, F-91450 Etioles (FR); Legrand, Gérard, F-75007 Paris (FR)
(74) Mandataire: Mongrédien, André

(56) Documents cités:
- EP-A- 0 381 869
- US-A- 3 534 686
- AVIATION WEEK & SPACE TECHNOLOGY, vol.115, no. 5, août 1981, pages 49-51, New York, US; J.M. LENOROVITZ: "French planunmanned space station"
- NEC RESEARCH & DEVELOPMENT, no. 85, avril1987, pages 106-110, Tokyo, JP; F. YAMASHITA et al.: "Japan's first amateur radio satellite; JAS-1"

## Description

La présente invention a pour objet un procédé de lancement dans l'espace d'une capsule et un moyen de lancement correspondant.

Dans ce qui suit, le mot "capsule" doit être pris dans le sens large de moyen contenant une charge utile quelconque, ce moyen étant apte à être lancé dans l'espace et à être récupéré sur terre. Le mot ne préjuge donc en rien de la forme de ce moyen, ni de la nature de la charge utile.

L'invention trouve une application privilégiée dans le domaine de la recherche en microgravité.

Le problème principal auquel se heurte aujourd'hui la recherche en microgravité est celui des moyens pour créer les conditions de cette microgravité : si l'on utilise des moyens de simulation, comme les tours à chute libre ou les vols paraboliques en avion, la durée de l'expérience est limitée (de quelques secondes à quelques dizaines de secondes) et insuffisante pour mener à bien des expériences complexes.

L'utilisation de fusées-sondes permet d'atteindre plusieurs minutes et de récupérer la charge utile, mais le coût s'en trouve accru et de toute façon la durée reste encore insuffisante pour un grand nombre de missions. En outre, la masse emportée est limitée par la taille des fusées-sondes existantes et le recours à des engins plus importants augmenterait sensiblement les coûts alors que la durée resterait réduite.

L'expérimentation en vol orbital reste donc le moyen le mieux adapté à cette recherche, mais elle suppose qu'on dispose d'occasions de vol appropriées.

Pour répondre à ce besoin, de nombreuses solutions ont été proposées qu'on peut classer en trois catégories :
- le lancement de capsules récupérables par des engins existants, tels le lanceur chinois CZ2, les lanceurs américains SCOUT et SUPER-SCOUT, le lanceur européen ARIANE 4,
- le développement de petits lanceurs dont la mission principale serait le lancement de charges utiles adaptées à la microgravité, comme le lanceur américain PEGASUS lancé depuis un bombardier, ou de petits lanceurs à poudre comme le lanceur LITTLE LEO de la firme britannique ORDNANCE,
- le vol partagé dans des capsules existantes pour lesquelles l'expérimentateur confierait son matériel au promoteur du système qui assurerait le lancement et la récupération. C'est ce que propose la Chine qui a déjà effectué plusieurs vols emportant des expériences européennes, notamment françaises, et l'Union Soviétique avec la capsule Photon. Cette solution aboutit à des prix bas, mais ne donne que très peu de maîtrise sur l'opération et aucun bénéfice technologique en matière de capsule, de rentrée ou d'opérations orbitales.

L'inconvénient principal de ces diverses solutions est de nécessiter un vol spécifique qui, même avec un petit lanceur, reste coûteux : à titre d'exemple, un lancement SCOUT revient à environ 12 millions de Dollars pour placer une charge de 200 kg à 500 km d'altitude. Il ne semble pas que les lanceurs légers en projet seront beaucoup plus économiques, car le lanceur SCOUT réutilise déjà largement des étages conçus et produits pour des lanceurs plus lourds.

On connaît des procédés et des lanceurs dans lesquels on partage le lanceur entre une ou plusieurs charges utiles et une capsule. Par exemple, le document publié dans NEC Research and Development, n° 85, Avril 1987, intitulé "Japan's First Amateur Radio Satellite ; JAS 1", par Fujio YAMASHITA et al. décrit un lanceur comprenant, dans son dernier étage, trois objets différents, un satellite de radiocommunications, une charge utile géodésique expérimentale et un volant magnétique. Ces trois objets, une fois lancés ensemble, sont ensuite séparés les uns des autres.

Le document EP-A-0 381 869, qui n'est à considérer que pour l'appréciation de la nouveauté de la présente invention, décrit un procédé de lancement d'un objet dans lequel cet objet est placé entre l'avant dernier et le dernier étage d'un lanceur, plus particulièrement dans le volume laissé libre autour de la tuyère du dernier étage.

Le vol partagé se heurte à un double inconvénient :
- l'orbite de transfert géostationnaire qui est utilisée est mal adaptée à la récupération d'une capsule car elle conduit à des flux thermiques très élevés à la rentrée et nécessite donc des protections thermiques lourdes ; elle peut entraîner en outre une dispersion plus grande de la zone d'impact, rendant plus difficile la récupération,
- malgré le partage du vol, le coût reste élevé pour la charge utile de microgravité, l'orbite de transfert étant coûteuse en énergie ; l'emport de ce passager supplémentaire se traduit nécessairement par le passage à une version plus puissante du lanceur.

L'utilisation de moyens orbitaux plus lourds, comme le "SPACELAB" ou "EURECA", est également possible mais conviendrait surtout à des dispositifs expériment aux confirmés. En effet, au coût élévé de l'emport de l'expérience résultant de son intégration à un ensemble complexe, s'ajoute le problème des délais parfois très longs entre la sélection d'une expérience et le moment où ses résultats sont disponibles pour analyse. Ces délais ne permettent pas d'établir un processus itératif. Même lorsque la grande capacité offerte par la station spatiale sera disponible, de nombreuses expériences devront justifier d'une pré-qualification obtenue à l'aide d'un système moins élaboré.

La présente invention a justement pour but de remédier à tous ces inconvénients.

A cette fin, l'invention préconise un procédé de lancement dans lequel on utilise un lanceur standard (tel que ARIANE 4 dans le cas de vols en orbite polaire ou ARIANE 5 quel que soit le vol) dans lequel la capsule est disposée comme passager auxiliaire, la capsule étant larguée en route au moment opportun.

Dans le premier cas (ARIANE 4), les satellites héliosynchrones dont le lancement est prévu (SPOT, ERS, HELIOS) utiliseront à peine la capacité d'une ARIANE 40, et une ARIANE 44P ou 42L sera suffisante pour mettre en oeuvre l'invention.

Dans le second cas (ARIANE 5), la même remarque est a fortiori valable pour les orbites polaires, le lancement double sur cette orbite apparaissant aujourd'hui comme peu vraisemblable. En orbite de transfert géostationnaire, la séparation entre l'étage cryotechnique et l'étage terminal L7 intervient alors que la vitesse orbitale est déjà atteinte et permet d'envisager une courte phase balistique pendant laquelle on procédera au largage de la capsule dont l'orbite sera ensuite ajustée aux paramètres voulus.

La capacité d'ARIANE 5 conduit à penser qu'au moins la moitié des lancements laisseront une capacité suffisante pour une capsule. La classe des satellites de 2500 à 3000 kg sera sans doute prépondérante mais des satellites de masse voisine de 2 tonnes subsisteront en nombre important. Le lancement double de deux satellites lourds occupera totalement ARIANE 5, tandis qu'un satellite lourd et un satellite moyen laisseront la place pour une masse additionnelle, insuffisante pour un satellite devant aller en orbite de transfert, mais bien adaptée à une capsule restant en orbite basse.

Naturellement, l'invention n'est pas limitée aux lanceurs ARIANE 4 ou 5. Elle s'applique à tout lanceur dès lors qu'à l'extinction de l'avant-dernier étage, l'altitude et la vitesse obtenues sont suffisantes pour obtenir une orbite basse et stable, c'est-à-dire ne recoupant pas l'atmosphère terrestre. En pratique, on considèrera qu'une orbite est stable dès lors que son premier périgée est au-delà de 110 km.

L'invention conduit alors à :
- une capsule récupérable utilisable pour les besoins de la microgravité et utilisant au maximum la capacité disponible lors des missons commerciales de lanceurs,
- des conditions financières attractives du fait de la situation de passayer auxiliaire permettant l'application d'une tarification préférentielle,
- l'utilisation d'éléments existants ou en développement provenant de programmes d'études sur les lanceurs et les satellites,
- un coût opérationnel réduit grâce à l'utilisation d'installations existantes pour la préparation des charges utiles et leur récupération.

De façon plus précise, l'invention a pour objet un procédé de lancement dans l'espace d'au moins une capsule sur une orbite terrestre basse, consistant à :
- utiliser un lanceur ayant une pluralité d'étages dont un avant-dernier étage et un dernier étage contenant au moins un satellite à placer sur une orbite plus énergétique que l'orbite visée pour la capsule, ce lanceur étant tel qu'à l'extinction de l'avant-dernier étage l'altitude et la vitesse atteintes soient suffisantes pour correspondre à une orbite stable,
- disposer la capsule dans le dernier étage d'un tel lanceur, comme passager auxiliaire,
- procéder au lancement normal du lanceur,
- larguer la capsule, pendant la phase balistique s'étendant entre l'extinction de l'avant-dernier étage et l'allumage du dernier étage,
- poursuivre le lancement du dernier étage pour la mise en orbite normale du ou des satellites.

La présente invention a également pour objet un moyen de lancement qui permet de mettre en oeuvre ce procédé.

De toute façon, les caractéristiques et avantages de l'invention apparaîtront mieux à la lumière de la description qui va suivre. Cette description porte sur des exemples de réalisation donnés à titre explicatif et nullement limitatif et se réfère à des dessins annexés sur lesquels :
- la figure 1 montre une première configuration de lancement correspondant au lanceur ARIANE 4 destiné à une mise en orbite héliosynchrone d'un satellite,
- la figure 2 montre une deuxième configuration de lancement correspondant au lanceur ARIANE 5 destiné à une mise en orbite héliosynchrone d'un satellite,
- la figure 3 montre une troisième configuration correspondant au lanceur ARIANE 5 destiné à une mise en orbite de transfert géostationnaire de deux satellites,
- la figure 4 montre l'architecture d'une capsule pouvant être lancée selon l'invention,
- la figure 5 illustre les différentes phases de largage de la capsule selon un premier scénario dans le cas du lanceur ARIANE 5 avec mise en orbite de transfert géostationnaire,
- la figure 6 illustre les différentes phases de largage de la capsule selon un second scénario dans le cas du lanceur ARIANE 5 avec mise en orbite de transfert géostationnaire.

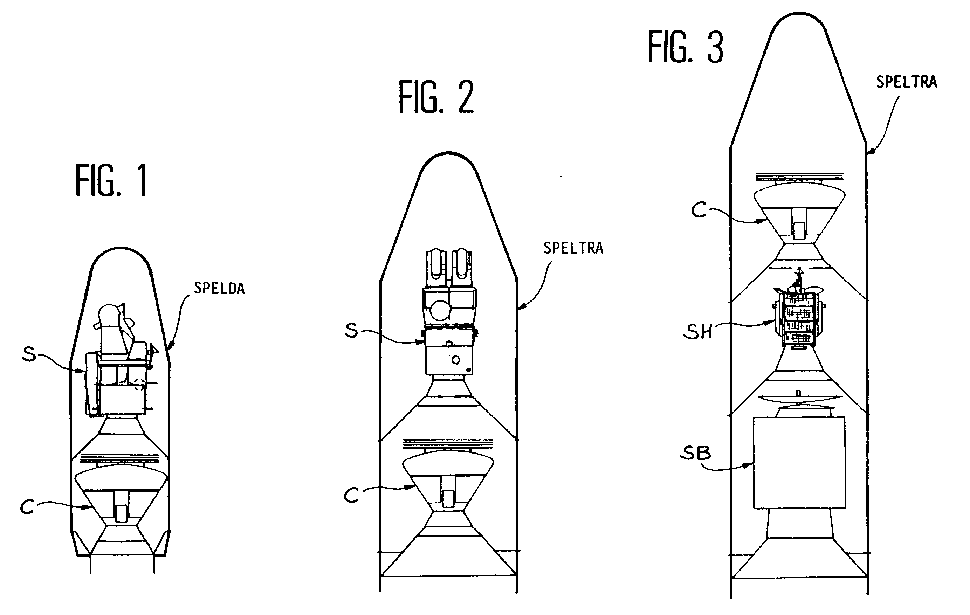

Trois exemples de configuration de lancement vont être décrits qui se rapportent aux lanceurs ARIANE 4 et 5. Ils sont illustrés sur les figures 1 à 3.

### EXEMPLE A

L'exemple A, illustré sur la figure 1, correspond au lanceur ARIANE 4. Seul un lancement en orbite basse et en particulier en orbite héliosynchrone ("SSO" pour "Sun Synchroneous Orbit") est utilisable. La capsule C est placée en position basse sous un satellite S dans la partie haute du lanceur appelée SPELDA (Structure Porteuse Externe pour Lancement Double ARIANE 4).

Une telle mission correspond à une mise en orbite circulaire à 835 km inclinée à 98°6. La capsule peut emporter jusqu'à 900 kg de charge utile sur une telle orbite (le conditionnement et les servitudes associées aux expériences étant inclus dans cette charge).

Le supplément de performance demandé au lanceur ARIANE 4 s'obtient par l'adjonction de propulseurs d'appoint (PAP et/ou PAL).

### EXEMPLE B

L'exemple B est illustré par la figure 2 et correspond au lanceur ARIANE 5. La capsule C est placée en position basse, sous un satellite S, dans une SPELTRA courte (Structure Porteuse Externe pour Lancement Triple Ariane 5).

La mission correspond à une mise en orbite héliosynchrone.

Deux cas sont possibles :
- la capsule est placée sur l'orbite 835 km/835 km/98°6 (orbite de référence correspondant à un satellite de la famille SPOT) ; on est alors ramené à l'orbite de la mission de l'exemple A,
- l'étage de propulsion stockable (EPS) est supprimé, la capsule étant injectée sur une orbite de transfert (typiquement 200 km/835 km/98°6).

On devra satisfaire à la plus contraignante des deux missions, qui semble a priori être la seconde.

Pour assurer un niveau satisfaisant de microgravité, la capsule doit alors relever le périgée de son orbite jusqu'à une valeur d'au moins 300 km.

Dans les deux cas, la capsule peut emporter jusqu'à 900 kg de charge utile (avec le conditionnement des expériences et les servitudes spécifiques).

La performance du lanceur étant très largement excédentaire, il n'y a pas de dispositions particulières à prendre vis-à-vis du lanceur.

### EXEMPLE C

L'exemple C est illustré sur la figure 3 et correspond au lanceur ARIANE 5. La capsule C est placée en position haute au-dessus d'un satellite haut SH et d'un satellite bas SB, l'ensemble étant disposé dans une SPELTRA longue.

Dans ce cas, la capsule est placée par ARIANE 5 sur l'orbite 135 km/2500 km/10°. La capsule est alors larguée après séparation de l'étage principal cryotechnique (EPC) et avant allumage de l'étage de propulsion stockable (EPS).

Le périgée de l'orbite doit être relevé par la capsule à une altitude d'au moins 300 km pour que le niveau de microgravité soit acceptable.

La capsule peut emporter une charge utile de 400 kg (avec le conditionnement des expériences et les servitudes spécifiques), lorsqu'elle accompagne une charge utile principale (du lanceur) de 5600 kg (2 satellites et une SPELTRA longue).

En fait, la masse de la charge utile de la capsule est déterminée par la capacité résiduelle en transfert géostationnaire offerte par le lanceur et la masse à vide de la capsule.

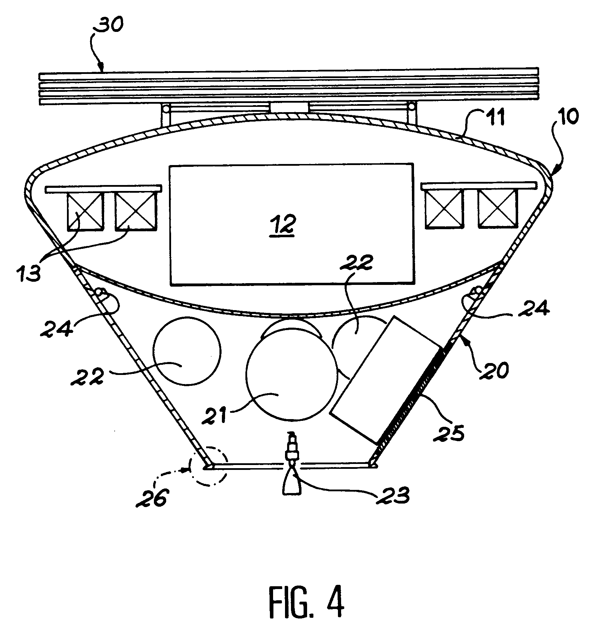

A titre purement explicatif, un schéma de l'architecture d'une capsule pouvant être lancée selon l'invention est représenté sur la figure 4. Telle que représentée, la capsule comprend un module de charge utile 10, un module de service 20 et des panneaux solaires 30.

Le module de charge utile 10 comprend un bouclier thermique 11, divers tiroirs 12 constituant la charge utile proprement dite et des batteries électriques 13.

Le module de service 20 comprend des réservoirs d'hydrazine 21, des réservoirs de gaz 22, une tuyère à hydrazine 23, des micro-tuyères 24 à gaz froid, disposées à la périphérie, une porte d'accès 25, une interface 26 avec le lanceur.

Le module de service comprend encore divers moyens non représentés (parachutes, moyens pyrotechniques, antennes de télémesure, moyens de télécommande et de localisation, senseurs d'attitude, etc...)

L'installation dans le lanceur d'une telle capsule doit répondre à plusieurs considérations :
a) la capsule, étant une charge utile d'accompagnement, doit apporter le minimum de contraintes à la charge utile principale. Sauf dans l'exemple C où cela n'est pas possible (puisqu'on largue la capsule "en route" comme on le comprendra mieux par la suite), il est préférable que la capsule soit en position basse, c'est-à-dire enfermée dans une SPELDA (cas d'ARIANE 4) ou une SPELTRA (cas d'ARIANE 5). Dans ces conditions, la forme et les dimensions du volume utile de la SPELDA (plus petite que la SPELTRA) impliquent que la capsule soit lancée "bouclier en haut". Cette disposition fait subir à la capsule une accélération maximale de 4g pendant le lancement dans le sens inverse de l'accélération subie lors de la rentrée dans l'atmosphère, mais la charge utile n'impose aucune exigence contraire.
b) Le montage de la capsule dans le lanceur doit se faire, si possible, au niveau de la partie conique de manière à éviter de perturber le bouclier thermique par une interface mécanique et un dispositif de séparation très chargés mécaniquement.
c) Enfin, on doit chercher à utiliser les adaptateurs lanceur/charge utile existants ou en développement.

Ces deux dernières exigences se trouvent satisfaites en utilisant un adaptateur 1194 A (muni de son dispositif de séparation) et en tronquant la capsule au diamètre correspondant, ce qui ne présente aucune difficulté sur le plan aérodynamique.

A titre purement explicatif, on peut utiliser une capsule homothétique du "Command Module" d'APOLLO, dans un rapport 3,65/3,89. Les dimensions de la capsule sont alors sensiblement les suivantes :
- grand diamètre (bouclier thermique) : 3650 mm
- petit diamètre (culot) : 1194 mm
- hauteur hors générateur solaire : 2440 mm
- hauteur avec générateur solaire : 2740 mm
- envergure générateur solaire déployé : 8000 mm.

On va décrire maintenant deux scenarii possibles valables dans le cas d'une mission correspondant à l'exemple C (ARIANE 5). Dans ces deux cas, le lanceur comprend un avant-dernier étage qui est un étage principal cryotechnique (EPC) et un dernier étage qui est un composite supérieur contenant la capsule C, un satellite haut SH (dans une SPELTRA supérieure), un satellite bas SB (dans une SPELTRA inférieure) et un étage propulseur L7 à ergols.

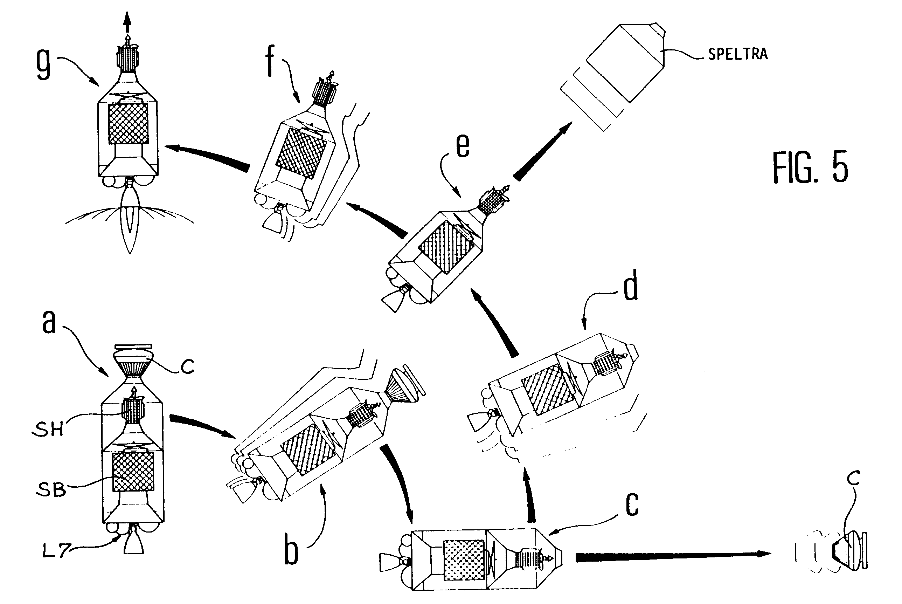

Le premier scénario de largage de la capsule, illustré sur la figure 5, est le suivant :
- après extinction de l'étage principal cryotechnique (EPC) et avant allumage du L7, le composite supérieur est dans la position référencée a ;
- on provoque un premier basculement du composite supérieur, pour faire basculer son axe de sa direction initiale vers une première direction déterminée, dans la variante illustrée à 90° de la direction initiale (positions référencées b et c) ;
- on largue la capsule dans cette première direction avec une vitesse déterminée,
- on provoque un second basculement du composite supérieur vers une seconde direction, dans la variante illustrée à 45° de la direction initiale ou de la seconde direction (positions référencées d, e) ;
- on largue la SPELTRA supérieure dans cette seconde direction,
- on provoque un troisième basculement du composite supérieur pour lui redonner sa direction initiale (positions référencées f et g),
- on allume l'étage L7 pour la poursuite normale du tir vers l'orbite de transfert géostationnaire (GTO).

Lors du largage de la capsule (position c), on a donné à la capsule une vitesse telle qu'à l'instant d'allumage du L7 (position g), la capsule soit suffisamment éloignée du composite pour n'être pas endommagée par cet allumage. Cette vitesse peut être par exemple de 0,5 à 1 m/s. A l'allumage du L7, la distance parcourue par la capsule sera d'environ 20 m, ce qui est suffisant.

Cette opération de largage dure un peu moins de 100 s. Elle entraîne une légère perte de performance du lanceur (environ 100 kg de charge utile) du fait de la durée de la phase balistique et de la masse d'hydrazine consommée par le système de contrôle d'attitude pour effectuer ces manoeuvres.

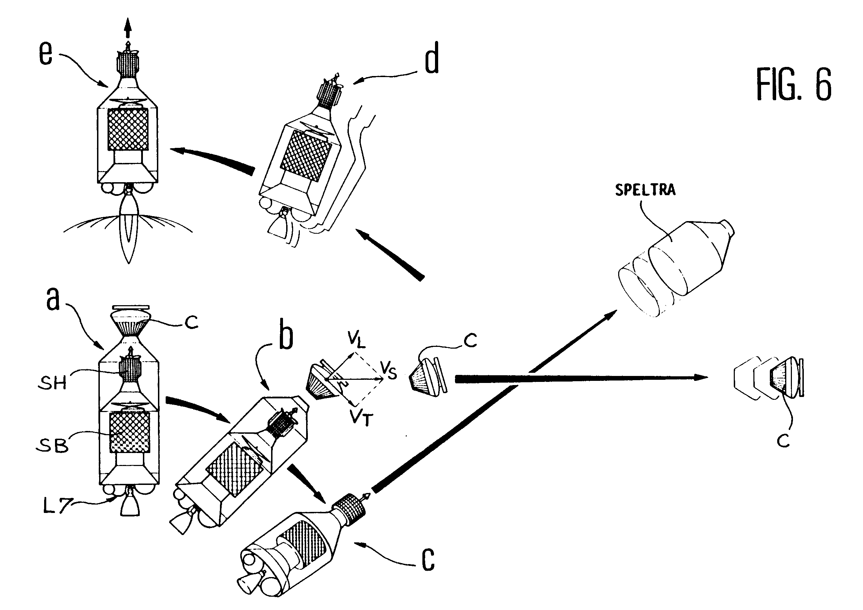

Dans le but, d'une part, de diminuer la durée de la phase balistique et la consommation d'hydrazine et, d'autre part, d'augmenter la distance capsule-composite lors de l'allumage de l'étage de propulsion stockable, un second scénario est possible. Il est illustré sur la figure 6.

Après séparation de l'étage principal cryotechnique (a), le composite est mis en rotation à accélération angulaire constante (b). La capsule est alors larguée pendant la rotation du composite, la vitesse longitudinale (due aux ressorts) et la vitesse tangentielle V_{T} (due à la rotation) se composant pour donner à la capsule une vitesse V_{S} perpendiculaire à la direction initiale du composite et supérieure à 1 m/s. Le composite stoppe ensuite sa rotation et avant de repartir dans l'autre sens, la SPELTRA supérieure est larguée (c). Les trajectoires de la SPELTRA et de la capsule se croisent mais pas au même instant. Il n'y a donc pas de risque de collision. Si tel était le cas, on pourrait toujours larguer la SPELTRA dans un plan légèrement différent.

Le composite bascule dans l'autre sens (d) et revient à sa position initiale (e). L'étage L7 est alors allumé. A cet instant, la capsule se trouve à plus de 30 m, ce qui la préserve de tout endommagement et l'opération est moins longue et moins consommatrice d'hydrazine que la précédente.

Les moyens de basculement du composite supérieur utilisent les moyens habituels de contrôle d'attitude d'ARIANE 5. Les moyens mécaniques de largage de la capsule font appel à des sangles et ressorts selon une technique bien connue. Toutes ces opérations peuvent être télécommandées à partir de la station de lancement au sol ou peuvent être automatiques.

## Revendications

1. Procédé de lancement dans l'espace d'au moins une capsule sur une orbite terrestre basse, consistant à :
- utiliser un lanceur ayant une pluralité d'étages dont un avant-dernier étage et un dernier étage contenant au moins un satellite à placer sur une orbite plus énergétique que l'orbite visée pour la capsule, ce lanceur étant tel qu'à l'extinction de l'avant-dernier étage l'altitude et la vitesse atteintes soient suffisantes pour correspondre à une orbite basse et stable,
- disposer la capsule dans le dernier étage d'un tel lanceur, comme passager auxiliaire,
- procéder au lancement normal du lanceur,
- larguer la capsule, pendant la phase balistique s'étendant entre l'extinction de l'avant-dernier étage et l'allumage du dernier étage,
- poursuivre le lancement du dernier étage pour la mise en orbite normale du ou des satellites.

2. Procédé selon la revendication 1, dans lequel le lanceur comprend un étage principal cryotechnique et un composite supérieur avec ses satellites dont un satellite dit "haut", caractérisé par le fait qu'il consiste à :
a) disposer la capsule sur une structure porteuse au sommet du composite supérieur au-dessus du satellite haut,
b) après extinction de l'étage principal cryotechnique et avant allumage du composite de l'étage supérieur, provoquer un premier basculement du composite supérieur, pour faire basculer son axe de sa direction initiale vers une première direction déterminée,
c) larguer la capsule dans cette première direction avec une vitesse déterminée,
d) provoquer un second basculement du composite supérieur vers une seconde direction,
e) larguer la structure porteuse de la capsule dans cette seconde direction,
f) provoquer un troisième basculement du composite supérieur pour lui redonner sa direction initiale,
g) allumer le moteur du composite supérieur pour la poursuite normale du lancement des satellites,
h) donner à la vitesse de largage de la capsule dans la première direction une valeur telle qu'à l'instant d'allumage du composite supérieur la capsule est suffisamment éloignée de ce composite pour n'être pas endommagée par cet allumage.

3. Procédé selon la revendication 2, caractérisé par le fait qu'on largue la capsule après que le composite supérieur a terminé son basculement vers la première direction.

4. Procédé selon la revendication 2, caractérisé par le fait qu'on largue la capsule pendant le basculement du composite supérieur vers la première direction, ce basculement s'effectuant à accélération angulaire constante.

5. Procédé selon la revendication 2, caractérisé par le fait que la première direction est à 90° de la direction initiale de l'étage supérieur.

6. Procédé selon la revendication 2, caractérisé par le fait que la deuxième direction est à 45° de la direction initiale.

7. Procédé selon la revendication 2, caractérisé par le fait qu'on lance plusieurs capsules en répétant les opérations b, c, d, e autant de fois qu'il y a de capsules à larguer.

8. Moyen de lancement dans l'espace d'au moins une capsule sur une orbite terrestre basse, ce moyen comprenant un lanceur avec une pluralité d'étages dont un avant-dernier étage et un dernier étage contenant au moins un satellite à placer sur une orbite plus énergétique que l'orbite visée pour la capsule, caractérisé par le fait que le lanceur comprend ladite capsule placée dans le dernier étage du lanceur, comme passager auxiliaire, le lanceur étant tel qu'à l'extinction de l'avant-dernier étage l'altitude et la vitesse atteintes soient suffisantes pour correspondre à une orbite basse et stable, le lanceur comprenant en outre des moyens pour larguer la capsule, pendant la phase balistique s'étendant entre l'extinction de l'avant-dernier étage et l'allumage du dernier étage.

9. Moyen de lancement selon la revendication 8, caractérisé par le fait que :
- le lanceur comprend un étage principal cryotechnique et un composite supérieur avec ses satellites dont un satellite dit "haut",
- la capsule est disposée sur une structure porteuse au sommet du composite supérieur au-dessus du satellite haut,
- il comprend : a) des moyens pour provoquer, après extinction de l'étage principal cryotechnique et avant allumage du composite supérieur, un premier basculement affectant le composite supérieur, ce premier basculement ayant pour effet de faire basculer la direction initiale du composite supérieur vers une première direction déterminée, b) des moyens pour larguer la charge utile dans cette première direction avec une vitesse déterminée, c) des moyens pour provoquer un second basculement du composite supérieur vers une seconde direction, d) des moyens pour larguer la structure porteuse de la capsule dans cette seconde direction, e) des moyens pour provoquer un troisième basculement du composite supérieur pour lui redonner sa direction initiale, f) des moyens pour donner à la vitesse déterminée de largage de la capsule dans la première direction une valeur telle qu'à l'instant d'allumage du composite supérieur la charge utile soit suffisamment éloignée de ce composite pour n'être pas endommagée par cet allumage.

10. Moyen de lancement selon la revendication 9, caractérisé par le fait que les moyens de largage de la charge utile sont aptes à agir après que le composite supérieur a terminé son basculement vers la première direction.

11. Moyen de lancement selon la revendication 10, caractérisé par le fait que les moyens de largage de la capsule sont aptes à agir alors que le composite supérieur est en cours de basculement vers la première direction.

## Patentansprüche

1. Verfahren zum Aussetzen von wenigstens einer Kapsel im Raum in eine niedrige Erdumlaufbahn, darin bestehend:
- eine Trägerrakete mit einer Vielzahl von Stufen zu verwenden, wobei eine vorletzte und eine letzte Stufe wenigstens einen Satelliten enthalten, der in eine energetischere Umlaufbahn gebracht werden soll, als die von der Kapsel angestrebte Umlaufbahn, wobei diese Trägerrakete so beschaffen ist, daß mit dem Erlöschen der vorletzten Stufe die erreichte Höhe und die Geschwindigkeit ausreichend sind, um einer niedrigen und stabilen Umlaufbahn zu entsprechen,
- die Kapsel als zusätzlichen Passagier in der letzten Stufe einer solchen Trägerrakete unterzubringen,
- einen normalen Start der Trägerrakete durchzuführen,
- die Kapsel auszusetzen während der ballistischen Phase, die sich erstreckt zwischen dem Erlöschen der vorletzten Stufe und dem Zünden der letzten Stufe,
- den Start der letzen Stufe fortzusetzen für ein normales Inumlaufbringen des oder der Satelliten.

2. Verfahren nach Anspruch 1, bei dem die Trägerrakete eine kryotechnische Hauptstufe und einen Oberaufbau mit seinen Satelliten umfaßt, mit einem "oberer" Satellit genannten Satelliten, dadurch gekennzeichnet, daß es darin besteht:
a) die Kapsel auf einer Trägerstruktur anzuordnen, oben auf dem Oberaufbau, über dem oberen Satelliten,
b) nach dem Erlöschen der kryotechnischen Hauptstufe und vor dem Zünden des Aufbaus der oberen Stufe ein erstes Schwenken des Oberaufbaus zu verursachen, um seine Achse aus seiner Anfangsrichtung in eine erste bestimmte Richtung zu schwenken,
c) die Kapsel in diese erste Richtung mit einer bestimmten Geschwindigkeit auszusetzen,
d) ein zweites Schwenken des Oberaufbaus in eine zweite Richtung zu verursachen,
e) die Trägerstruktur der Kapsel in diese zweite Richtung abzuwerfen,
f) ein drittes Schwenken des Oberaufbaus zu verursachen, um ihm seine Anfangsrichtung wiederzugeben,
h) der Abstoßgeschwindigkeit der Kapsel in der ersten Richtung einen solchen Wert zu geben, daß im Moment der Zündung des Oberaufbaus die Kapsel weit genug entfernt ist von diesem Aufbau, um durch diese Zündung nicht beschädigt zu werden.

3. Verfahren nach Anspruch 2, dadurch gekennzeichnet, daß man die Kapsel aussetzt nachdem der obere Aufbau seine Schwenkung in die erste Richtung beendet hat.

4. Verfahren nach Anspruch 2, dadurch gekennzeichnet, daß man die Kapsel aussetzt während der Schwenkung des Oberaufbaus in die erste Richtung, wobei diese Schwenkung mit konstanter Winkelbeschleunigung durchgeführt wird.

5. Verfahren nach Anspruch 2, dadurch gekennzeichnet, daß die erste Richtung um 90° gegen die Anfangsrichtung des Oberaufbaus versetzt ist.

6. Verfahren nach Anspruch 2, dadurch gekennzeichnet, daß die zweite Richtung um 45° gegen die Anfangsrichtung versetzt ist.

7. Verfahren nach Anspruch 2, dadurch gekennzeichnet, daß man mehrere Kapseln startet, indem man die Operationen b, c, d, e so oft wiederholt, als es auszusetzende Kapseln gibt.

8. Einrichtung zum Starten von wenigstens einer Kapsel im Raum in eine niedrige Erdumlaufbahn, wobei diese Einrichtung eine Trägerrakete mit einer Vielzahl Stufen umfaßt, wovon eine vorletzte Stufe und eine letzte Stufe wenigstens einen Satelliten enthält, der auf eine energetischere Umlaufbahn gebracht werden soll, als die für die Kapsel angestrebte Umlaufbahn,
gekennzeichnet durch die Tatsache, daß die Trägerrakete die genannte Kapsel enthält, untergebracht in der letzten Stufe der Trägerrakete als zusätzlicher Passagier, wobei die Trägerrakete so beschaffen ist, daß mit dem Erlöschen der vorletzten Stufe die erreichte Höhe und die Geschwindigkeit ausreichen, um einer niedrigen und stabilen Umlaufbahn zu entsprechen, wobei die Trägerrakete außerdem die Einrichtungen enthält, um die Kapsel auszusetzen während der ballistischen Phase, die sich erstreckt zwischen dem Erlöschen der vorletzten Stufe und dem Zünden der letzten Stufe.

9. Starteinrichtung nach Anspruch 8, gekennzeichnet durch die Tatsache, daß:
- die Trägerrakete eine kryotechnische Hauptstufe umfaßt und einen Oberaufbau mit seinen Satelliten, darunter ein "oberer" Satellit genannter Satellit,
- die Kapsel auf einer Trägerstruktur oben auf dem Oberaufbau über dem oberen Satelliten angeordnet ist,
- sie umfaßt: a) Einrichtungen, um nach dem Erlöschen der kryotechnischen Hauptstufe und vor dem Zünden des Oberteils eine erste Schwenkung des Oberteils zu verursachen, wobei diese erste Schwenkung den Zweck hat, die Anfangsrichtung des Oberaufbaus in eine festgelegte erste Richtung zu schwenken, b) Einrichtungen, um die Nutzlast in dieser ersten Richtung mit einer bestimmten Geschwindigkeit auszusetzen, c) Einrichtungen, um eine zweite Schwenkung des Oberaufbaus in eine zweite Richtung zu verursachen, d) Einrichtungen, um die Trägerstruktur der Kapsel abzuwerfen in diese zweite Richtung, e) Einrichtungen, um eine dritte Schwenkung des Oberaufbaus zu verursachen, um ihm seine Anfangsrichtung wiederzugeben, f) Einrichtungen, um der festgelegten Aussetzgeschwindigkeit der Kapsel in der ersten Richtung einen solchen Wert zu geben, daß im Moment des Zündens des Oberaufbaus die Nutzlast ausreichend weit entfernt ist von diesem Aufbau, um durch dieses Zünden nicht beschädigt zu werden.

10. Starteinrichtung nach Anspruch 9, gekennzeichnet durch die Tatsache, daß die Aussetzeinrichtungen der Nutzlast in der Lage sind, zu wirken, nachdem der Oberaufbau seine Schwenkung in die erste Richtung beendet hat.

11. Starteinrichtung nach Anspruch 10, gekennzeichnet durch die Tatsache, daß die Aussetzeinrichtungen der Kapsel in der Lage sind, zu wirken, wenn der Oberaufbau seine Schwenkbewegung in die erste Richtung ausführt.

## Claims

1. Process of launching at least one capsule into space on a low earth orbit, comprising:
- using a launcher having multiple stages including a next-to-last stage and a last stage containing at least on satellite to be placed in a more energetic orbit than the orbit aimed at for the capsule, this launcher being such that at burnout of the next-to-last-stage, the altitude and the velocity reached are sufficient to correspond to a low and stable orbit,
- placing the capsule in the last stage of such a launcher, as an auxiliary passenger,
- initiating the normal launching of the launcher,
- releasing the capsule, during the ballistic phase extending between the burnout of the next-to-last stage and the ignition of the last stage,
- tracking the launching of the last stage to put the satellite or satellites into normal orbit.

2. Process according to claim 1, wherein the launcher comprises a cryogenic main stage and an upper composite with its satellites of which one satellite is called "high", characterized in that it comprises:
a) the capsule being placed on a carrying structure at the vertex of the upper composite above the high satellite,
b) after burnout of the cryogenic main stage and before ignition of the composite of the upper stage, performing a first slewing of the upper composite to make its axis slew from its initial direction toward a first given direction,
c) the capsule being released in this first direction with a given velocity,
d) performing a second slewing of the upper composite toward a second direction,
e) releasing the carrying structure of the capsule in this second direction,
f) performing a third slewing of the upper composite to give it its initial direction again,
g) igniting the vehicle of the upper composite for the normal tracking of the launching of satellites,
h) giving a value to the velocity of release of the capsule in the first direction such that at the moment of ignition of the upper composite, the capsule is far enough from this composite not to be damaged by this ignition.

3. Process according to claim 2, characterized in that the capsule is released after the upper composite has ended its slewing toward the first direction.

4. Process according to claim 2, characterized in that the capsule is released during the slewing of the upper composite toward the first direction, this slewing being performed at constant angular acceleration.

5. Process according to claims 2, characterized in that the first direction is 90° from the initial direction of the upper stage.

6. Process according to claim 2, characterized in that the second direction is 45° from the initial direction.

7. Process according to claim 2, characterized in that several capsules are launched by repeating operations b, c, d, e as many times as there are capsules to be released.

8. Means of launching at least one capsule into space in a low earth orbit, said means comprising a launcher having a plurality of stages, including a penultimate stage and a final stage containing at least one satellite to be placed on a more energetic orbit than the orbit aimed at for the capsule, characterized in that the launcher comprises said capsule placed in the final launcher stage, as the auxiliary passenger, the launcher being such that on burnout of the penultimate stage the altitude and speed reached are adequate to correspond to a low, stable orbit, the launcher also having means for releasing the capsule during the ballistic phase extending between the burnout of the penultimate stage and the ignition of the final stage.

9. Launching means according to claim 8, characterized in that
- the launcher comprises a cryogenic main stage and an upper composite with its satellites of which one satellite is called "high",
- the capsule is placed on a carrying structure at the vertex of the upper composite above the high satellite,
- it comprises: a) means to bring about, after burnout of the cryogenic main stage and before ignition of the upper composite, a first slewing affecting the upper composite, this first slewing having the effect of slewing the initial direction of the upper composite toward a first given direction, b) means to release the payload in this first direction with a given velocity, c) means to bring about a second slewing of the upper composite toward a second direction, d) means to release the carrying structure of the capsule in this second direction, e) means to bring about a third slewing of the upper composite to give it its initial direction again, f) means to give a value to the given velocity of release of the capsule in the first direction so that at the moment of ignition of the upper composite, the payload is far enough from this composite so as not to be damaged by this ignition.

10. Launching means according to claim 9, characterized in that the means of release of the payload are able to act after the upper composite has ended its slewing toward the first direction.

11. Launching means according to claim 10, characterized in that the means of release of the capsule are able to act while the upper composite is in the process of slewing toward the first direction.
